# EUROPEAN PATENT APPLICATION

(11) **EP 4 764 265 A1**
(43) Date of publication of application: **24.06.2026**
(21) Application number: 24220587.0
(22) Date of filing: 17.12.2024
(51) Int. Cl.: F16J 15/02, F16J 15/08

(54) **ASSEMBLY FOR AN INTERNAL COMBUSTION ENGINE**

(71) Applicant: Innio Jenbacher GmbH & Co OG, 6200 Jenbach (AT)
(72) Inventor: FIMML, Wolfgang, 6212 Maurach in Tirol (AT); SPYRA, Nikolaus, 6020 Innsbruck (AT); WALDNER, Günther, 6215 Achenkirch (AT)
(74) Representative: Torggler & Hofmann Patentanwälte - Innsbruck

(57) **Abstract**

Assembly for an internal combustion engine (10) comprising a chamber component (2), preferably a cylinder liner (3) or a crank case (4), a cylinder head (5), and at least one head gasket (6) for sealing a combustion chamber (7) against the environment, wherein the at least one head gasket (6) comprises a cavity (8), which cavity (8) is closed at least towards the combustion chamber (7).

## Description

The present disclosure concerns an assembly for an internal combustion engine comprising a chamber component, preferably a cylinder liner or a crank case, a cylinder head, and at least one head gasket for sealing a combustion chamber against the environment.

Modern internal combustion engines are subject to increasingly strict requirements regarding the creation of emission such as unburnt hydrocarbons. This is especially true for stationary internal combustion engines of relatively large scale which drive a generator for the generation of electric energy.

Manufacturers have explored a plethora of avenues for reducing emissions for example by controlling the combustion precisely. Such approaches are very important, but they ultimately are limited by the combusted fuel, e.g., natural gas, and environmental factors such that a significant further reduction of the emissions cannot necessarily be expected therefrom.

The object of the present disclosure is to significantly reduce the emissions stemming from unburnt fuel, e.g., in stationary internal combustion engines.

The object is achieved by an assembly according to claim 1, namely an assembly for an internal combustion engine comprising a chamber component, preferably a cylinder liner or a crank case, a cylinder head, and at least one head gasket for sealing a combustion chamber against the environment, wherein the at least one head gasket comprises a cavity, which cavity is closed at least towards the combustion chamber.

Under a clamping action of the cylinder head onto the chamber component the at least one head gasket will deform at least partially elastically, preferably only elastically, i.e., not plastically, such that also the cavity deforms. This results in a pre-load of the at least one head gasket comprising the cavity onto the surrounding components. The function how this results in a lower amount of hydrocarbons is set out below.

Clamping the cylinder head onto a crank case and/or a cylinder liner with at least one head gasket between the cylinder head and the crank case and/or the cylinder liner therebetween is in and of itself of course known in the prior art. The combustion chamber is then delimited for example by the cylinder liner (or the crank case) and the cylinder head, potentially additionally by further components, for example a scraper ring mounted in the cylinder liner or the crank case.

In the embodiments according to the prior art the hydrocarbons of the fuel can however enter gaps between the mentioned components during the intake, compression, and combustion strokes. In particular, during the combustion the engine is subjected to high intensity vibration which can lead to gaps between the cylinder head, the crank case, the cylinder liner, and/or the scraper ring which are enlarged over short time durations.

The hydrocarbons which reach these volumes will in general not combust at all or only to an insufficient degree such that they eventually get expelled out of the combustion chamber during the exhaust stroke. The volumes into which fuel can reach, but not combust may be called dead volumes.

While it is clear that in absolute terms the amount of unburnt hydrocarbon emissions created in this way may be quite small, the mentioned ever stricter requirements imposed on such engines set tight bounds on emissions stemming from unburnt fuel.

The present disclosure envisages that the at least one head gasket additionally comprises at least one head gasket with a cavity which is closed off from the combustion chamber and which deforms under the clamping action clamping the cylinder head onto the chamber component, e.g., the crank case and/or the cylinder liner and/or a scraper ring.

Because of the deformed gasket and cavity the at least one head gasket is imbued not only with an elasticity, but also a larger spring back effect such that the mentioned gaps between the various components surrounding the combustion chamber do not form in the first place because the at least one head gasket comprising the cavity simply expands again elastically. Formulated differently, the larger spring back effect means that the head gasket with a cavity can expand much further than a head gasket according to the prior art. In short, the at least one head gasket comprising the cavity according to the present disclosure can prevent said dead volumes at least partially.

Analysis carried out by the applicant has surprisingly shown that the amount of emissions in the form of unburnt fuel can in this way be decreased by 20% or more.

It should be noted that decreasing the amount of unburnt fuel automatically results in an increase of the efficiency of the internal combustion engine since the previously unburnt fuel does get combusted according to the present disclosure.

That the cavity is closed at least towards the combustion chamber can be understood such that any measurable or relevant fluid communication between the combustion chamber and the cavity is prevented. However, in some embodiments the cavity may be in fluid communication with the environment. In preferred embodiments the cavity is completely closed.

The gasket according to the present disclosure can be combined with head gaskets according to the prior art. In such embodiments it is particularly preferable that the head gasket comprising the cavity is disposed closer to the combustion chamber than the head gaskets according to the prior art in order to reduce the amount of unburnt fuel as much as possible.

The at least one head gasket comprising the cavity may preferably be made from steel.

Since for example steel has a higher resistance to thermal loads than most elastomeric materials head gaskets from steel can be placed closer to the combustion chamber such that gaps and the like which would cause unburned fuel can be minimised.

It is possible to have more than one head gasket with one or more cavities (each). Such embodiments allow for a particularly secure seal between the cylinder head and the chamber component, such as the crank case and/or the cylinder liner and/or a scraper ring.

It is furthermore possible to have two or more head gaskets with a cavity each wherein the respective cavities are in fluid communication with each other.

The at least one head gasket comprising a cavity can be easily implemented, independently of which type of cylinder liner concept (bottom stop, mid stop, top stop; wet liner, dry liner) is preferred for the particular engine.

The chamber component can be understood as the component or group of components for an internal combustion engine which make up a lateral wall of a combustion chamber, such as a cylinder. In many internal combustion engines the lateral wall of the combustion chamber, in particular cylinder wall, is formed by the crank case itself or a cylinder liner disposed in the crank case. Alternatively, or additionally, the chamber component can also be a scraper ring. Mixed embodiments or embodiments with several distinct parts making up the lateral wall of the combustion chamber are of course conceivable. If the lateral wall is made up of a plurality of component parts, this group of components collectively can be understood as the chamber component. The at least one head gasket can optionally be part of this group.

It should be noted that the assembly according to the present disclosure can also be used in already existing internal combustion engines since it may for example only require the use of slightly altered cylinder liner and the at least one head gasket comprising the cavity according to the present disclosure

Protected is additionally an internal combustion engine with an assembly according to the present disclosure.

Such internal combustion engines can for example be stationary combustion engines configured for driving a generator for generating electric energy. The combination of such an internal combustion engine configured for driving a generator is known as genset. Naval applications of the present disclosure are of course also conceivable.

The internal combustion engine can comprise separate crank cases and/or cylinder heads for each of the cylinders. Combined crank cases and/or cylinder heads for each bank of cylinders and/or all cylinders are of course conceivable. Independently thereof the assembly according to the present disclosure can be realised in one, a plurality, or preferably all of the cylinders of the internal combustion engine.

The internal combustion engine can preferably be configured to combust natural gas and/or molecular hydrogen as fuel. Of course, other fuels, such as methane or generally mixtures containing hydrocarbons.

Further advantageous embodiments of the present disclosure are defined in the dependent claims.

As mentioned, in particularly preferred embodiments the cavity is completely closed. In other words, the cavity comprised in the at least one head gasket forms a separate volume which is not in fluid communication with the combustion chamber or the environment or any other separate volumes. Such embodiments can be particularly preferred as they are particularly easy to manufacture or effective in preventing unburnt fuel, in particular unburnt hydrocarbons.

In other embodiments a cross section of the at least one head gasket comprising the cavity could for example have a base shape of a C with the open side of the C facing away from the combustion chamber.

The at least one head gasket can preferably have an annular structure. In this way the at least one head gasket comprising the cavity can in a simple way azimuthally cover the interface between the chamber component (e.g., the crank case and/or the cylinder liner) completely.

The cross-section of the at least one head gasket in an unloaded state can particularly preferably be substantially annular which constitutes a particularly simple embodiment wherein the cavity is completely closed.

A cross-section of the cavity of the at least one head gasket may in simple embodiments and in an unloaded state be substantially circular.

In particularly preferred embodiments the cavity can be filled with a pressurised gas. Such embodiments may be particularly preferred as the pressure of the gas can be used to adjust the spring rate of the at least one head gasket comprising the cavity precisely as intended. It can in particular be adjusted so that on the one hand the pre-load of the cylinder head onto the chamber component reliably deforms the at least one head gasket as desired to achieve the correct geometry, e.g., of the combustion chamber, and on the other hand the effect of the at least one head gasket comprising the cavity of sealing dead volumes is optimised.

Annular rings with a closed cavity filled with a pressurised gas are particularly preferred embodiments to be used as the at least one head gasket according to the present disclosure. Such gaskets are in and of themselves known as Willis Rings in the prior art.

As far as the applicant is aware such Willis Rings have however never been considered as head gaskets for internal combustion engines, in particular stationary internal combustion engines configured to drive generators for creating electric energy (gensets).

The pressurised gas can particularly preferably be an inert gas, e.g., molecular nitrogen.

The pressure of the gas in the cavity can for example be between 30bar and 110bar, preferably between 50bar and 90bar and particularly preferably between 60bar and 80bar. Analysis carried out by the applicant has shown that in these pressure regions there can on the one hand be an ideal deformation of the gasket and on the other hand sufficient pre-load for minimising unburnt fuel.

The at least one head gasket comprising the cavity can be arranged on an inner side of the chamber component, preferably the cylinder liner, facing the combustion chamber.

A distance of the at least one head gasket comprising the cavity according to this disclosure can preferably be less than a diameter of the at least one head gasket comprising the cavity.

The closer the at least one head gasket comprising the cavity is to the combustion chamber the less dead volume will be present.

Particularly preferably, the at least one head gasket comprising the cavity can be part of a chamber wall of the combustion chamber. In such preferred embodiments the presence of dead volumes in the region of the head gasket can be virtually excluded.

The chamber component, in particular the crank case and/or the cylinder liner, can particularly preferably comprise a deepened structure, preferably in the form of a recess and/or a channel, in which the at least one head gasket comprising the cavity is arranged. The at least one head gasket comprising the cavity can in this way be integrated into the assembly in a particularly simple and easy-to-manufacture way.

The combustion chamber can particularly preferably have a lateral chamber wall which is substantially of cylindrical shape.

The chamber component, preferably the cylinder liner, can comprise an integrated scraper ring on a side facing the cylinder head. Scraper rings can be used to prevent build up of deposits and unburnt fuel in a somewhat hollow space between the lateral wall of the combustion chamber, a lateral side of a piston and a piston ring.

Integrating the scraper ring into the chamber component offers a simple way of further reducing dead volumes in which unburnt fuel can be created.

In some embodiments the chamber component, preferably the cylinder liner, comprises a lip which creates a curvature of the lateral chamber wall of the combustion chamber towards a flame deck of the cylinder head. Cornered geometries in the combustion chamber can be further reduced in this way, which may be advantageous because also cornered geometries have been observed as promoting unburnt fuel.

The flame deck of the cylinder head is the surface or the part of the cylinder head which delimits and directly faces the combustion chamber.

Instead of the at least one head gasket comprising a cavity it is also possible to use an elastomeric O-ring (according to claim 14).

Elastomeric O-rings can also deform in relatively large amounts and - surprisingly - there are O-rings which are rated for the temperatures that occur in the vicinity of the combustion chamber in an internal combustion engine.

Elastomeric O-rings and head gaskets comprising a cavity can also be combined, both in the sense that there is at least one head gasket with a cavity and there is at least one elastomeric O-ring as head gasket, and in the sense that the at least one O-ring comprises a cavity.

In preferred embodiments the at least one O-ring is made of full material, i.e., the at least one O-ring does not comprise cavity.

In preferred embodiments the at least one O-ring is made from a fluoroelastomer. In particularly preferred embodiments the fluoroelastomer is an FKM (Fluorine Kautschuk Material) and/or FFKM (both defined in ISO/DIN 1629). These materials exhibit very strong resistance to thermal loads and are therefore particularly useful in the vicinity of combustion chambers of internal combustion engines.

Head gaskets in the form of at least one O-ring can also be used in conjunction with one or more of the following features:
- the chamber component, in particular the cylinder liner and/or the crank case, comprises a deepened structure, preferably in the form of a recess and/or a channel, in which the at least one O-ring is arranged and/or
- the combustion chamber has a lateral chamber wall which is substantially of cylindrical shape and/or
- the chamber component, preferably the cylinder liner, comprises an integrated scraper ring on a side facing the cylinder head and/or
- the chamber component, preferably the cylinder liner, comprises a lip which creates a curvature of the lateral chamber wall of the combustion chamber towards a flame deck of the cylinder head.

In particularly preferred embodiments a distance of the at least one head gasket in the form of at least one O-ring from the combustion chamber is less than a diameter of the at least one O-ring, particularly preferably less than half a diameter of the at least one O-ring.

Further advantages and details of the present disclosure are apparent from the figures and the accompanying description of the figures. The figures show:
- Fig. 1a and 1b: an example embodiment of an assembly and an internal combustion engine in the area of the cylinder head in schematic cross-sections,
- Fig. 2: another example embodiment of an assembly and an internal combustion engine in the area of the cylinder head in a schematic cross-section,
- Fig. 3: an example embodiment of a head gasket in a schematic cross-section in an unloaded state,
- Fig. 4: another example embodiment of an assembly and an internal combustion engine in the area of the cylinder head in a schematic cross-section,
- Fig. 5: another example embodiment of an assembly and an internal combustion engine in the area of the cylinder head in a schematic cross-section,
- Fig. 6a and 6b: another example embodiment of an assembly and an internal combustion engine in the area of the cylinder head in schematic cross-sections,
- Fig. 7: another example embodiment of an assembly and an internal combustion engine in the area of the cylinder head in a schematic cross-section,
- Fig. 8: another example embodiment of an assembly and an internal combustion engine in the area of the cylinder head in a schematic cross-section, and
- Fig. 9: schematically an embodiment of an internal combustion engine driving a generator (genset).

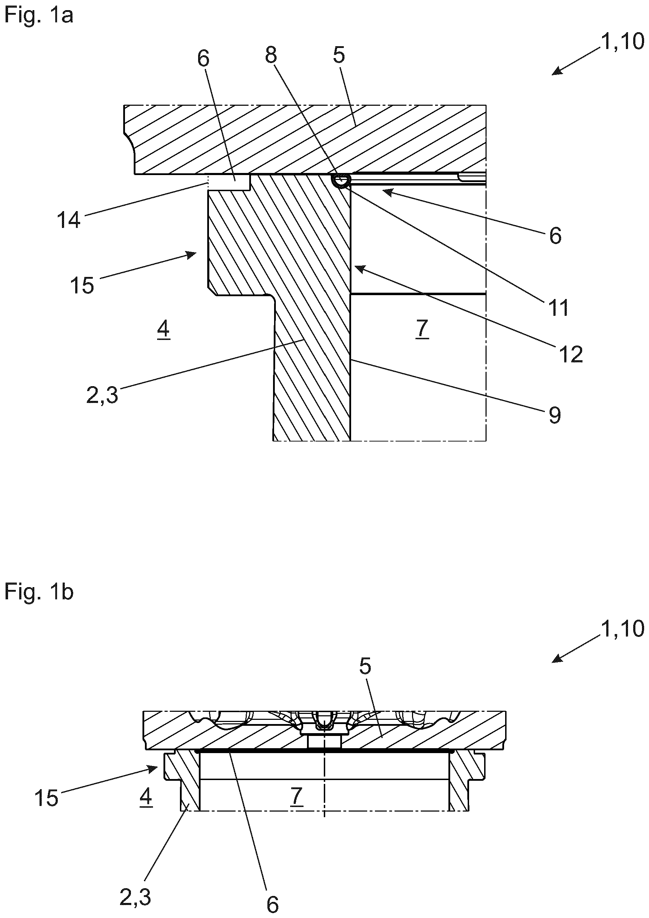

Fig. 1a and 1b show an example embodiment of an assembly 1 and an internal combustion engine 10 in the area of the cylinder head 5 and the combustion chamber 7.

The chamber component 2 which forms the main part of the lateral chamber wall 9 of the combustion chamber 7 is in this embodiment a cylinder liner 3 which is disposed in an opening of the crank case 4.

There is a head gasket 6 comprising a cavity 8. The cylinder head 5 is clamped onto the chamber component 2, as mentioned here the cylinder liner 3. The clamping force deforms the head gasket 6 elastically by a large amount such that also the cavity 8 of the head gasket 6 deforms. Under strong mechanical and thermal loads as well as in the environment with strong vibrations as they occur in the combustion chamber during operation the head gasket 6 with a cavity can therefore expand more and prevent dead volumes into which fuel can travel.

Unburnt fuel is therefore minimised because said dead volumes do not occur or occur to a lesser degree.

The combustion chamber 7 in this embodiment has a lateral chamber wall 9 which is substantially of cylindrical shape.

The head gasket 6 comprising the cavity 8 is in this embodiment made from steel.

The cylinder liner 3 in this embodiment comprises a top stop 15 with which the cylinder liner 3 is clamped into the crank case 4, e.g., by a clamping action of the cylinder head 5 onto the crank case 4. However, the head gasket 6 comprising the cavity 8 according to this disclosure can also be easily implemented together with other concepts such as mid stop liners or bottom stop liners.

In this embodiment the cavity 8 is completely closed. In other words, the cavity 8 comprised in the head gasket 6 forms a separate volume which is not in fluid communication with the combustion chamber 7 or the environment or any other separate volumes.

As can be seen in particular from Fig. 1b the head gasket 6 has an annular structure.

In this embodiment the cavity 8 is filled with a pressurised gas, namely molecular nitrogen at about 70 bar.

Annular rings with a closed cavity 8 filled with a pressurised gas such as used in this embodiment are sometimes known as Willis Rings.

The head gasket 6 comprising the cavity 8 according to Fig. 1 and 1b can be combined with a head gasket6 according to the prior art. In Fig. 1a this is symbolised by the dashed line 14 signifying the additional head gasket 6. In this embodiment the head gasket 6 comprising the cavity 8 is disposed closer to the combustion chamber 7 than the head gasket 6 according to the prior art in order to reduce the amount of unburnt fuel as much as possible.

The head gasket 6 comprising the cavity 8 is in this embodiment arranged on an inner side of the chamber component 2, namely the cylinder liner 3, facing the combustion chamber 7.

Furthermore, in this embodiment the head gasket 6 comprising the cavity 8 is part of the lateral chamber wall 9 of the combustion chamber 7.

The chamber component 2, in this case the cylinder liner 3, comprises a deepened structure 11, here in the form of a recess or a channel, in which the head gasket 6 comprising the cavity 8 is arranged.

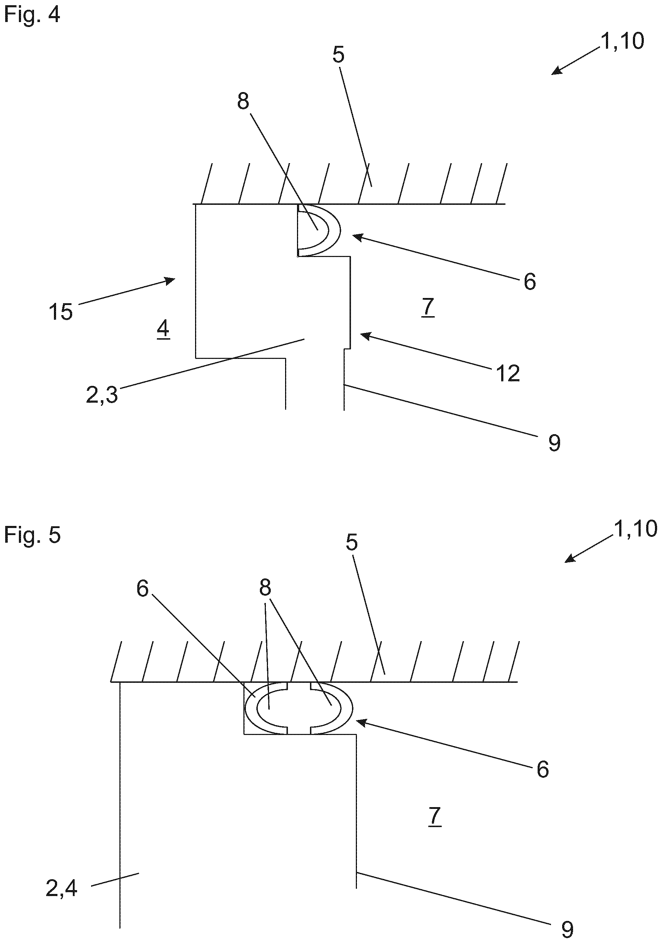

The chamber component 2, in this case the cylinder liner 3, comprises an integrated scraper ring 12 on a side facing the cylinder head 5. However, the scraper ring 12 is in essence invisible in Fig. 1a and 1b as it has only a miniscule elevation above the lateral chamber wall 9 which is sufficient for its function. A scraper ring 12 drawn with disproportionally large elevation is depicted in Fig. 4.

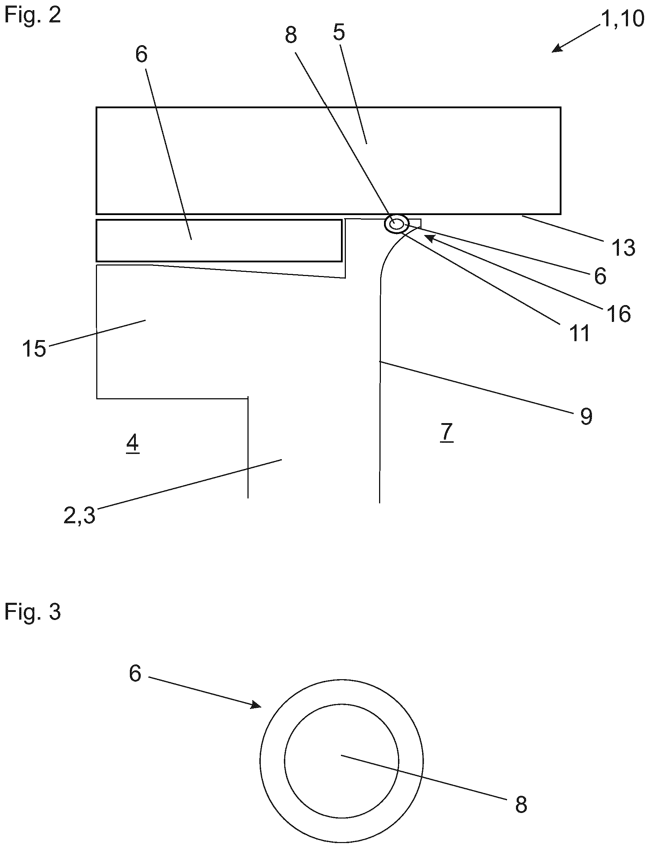

Fig. 2 schematically depicts another embodiment in which the chamber component 2, in this case the cylinder liner 3, comprises a lip 16 which creates a curvature of the lateral chamber wall 9 of the combustion chamber 7 towards a flame deck 13 of the cylinder head 5. In other words, the lip 16 creates a smoother transition of the lateral chamber wall 9 into the flame deck 13. Cornered geometries in the combustion chamber 7 can be further reduced in this way, which may be advantageous because also cornered geometries have been observed as promoting unburnt fuel.

A distance of the head gasket 6 comprising the cavity 8 is in this embodiment less than a diameter of the head gasket 6 comprising the cavity 8. It should be mentioned that the diameter refers to the diameter in one cross-section of the at least one head gasket 6 as depicted in Fig. 1a, not the complete cross-section of the annular structure as depicted in Fig. 1b.

In other ways the embodiment from Fig. 2 is similar to the embodiment of Fig. 1a and 1b.

Fig. 3 schematically shows an embodiment of a head gasket 6 comprising a cavity 8 as it may be used in the embodiments of Fig. 1a and 1b as well as Fig. 2 in a cross-section and in an unloaded state.

The cross-section of the head gasket 6 in the unloaded state is substantially annular which constitutes a particularly simple embodiment wherein the cavity 8 is completely closed.

The cross-section of the cavity 8 of the head gasket 6 is in this embodiment substantially circular in the unloaded state.

Fig. 4 schematically shows an example embodiment where the cavity 8 of the head gasket 6 is not completely closed, but still closed towards the combustion chamber 8. In this way the elastic properties with large spring back effects according to the present disclosure can still be used without having to resort to completely closed cavities 8 in the head gasket 6.

In this embodiment a cross section of the head gasket 6 comprising the cavity 8 for example has a base shape of a C with the open side of the C facing away from the combustion chamber 7.

As mentioned before, the embodiment of Fig. 4 comprises a scraper ring 14 which is depicted with an unrealistic and disproportionate elevation of the scraper ring 12 over the rest of the lateral chamber wall 9 in order to make its structure visible.

In other ways the embodiment of Fig. 4 is similar to the embodiments of Fig. 1a and 1b.

Fig. 5 schematically shows a further embodiment which is similar to the embodiment of Fig. 4.

However, in this embodiment there are two head gaskets 6 with a cavity 8 each wherein the respective cavities 8 are in fluid communication with each other.

In this embodiment the chamber component 2 is the crank case 4 itself. However, it should be mentioned that the gasket configuration according to Fig. 5 could also be used in the embodiments according to Fig. 1a and 1b as well as according to Fig. 2, 4, and 6a and 6b.

Likewise, the gasket configurations disclosed in connection with Fig. 1a and 1b as well as in connection with Fig. 2, 4, and 6a and 6b can be used together with embodiments where the chamber component 2 is or comprises the crank case 4 itself.

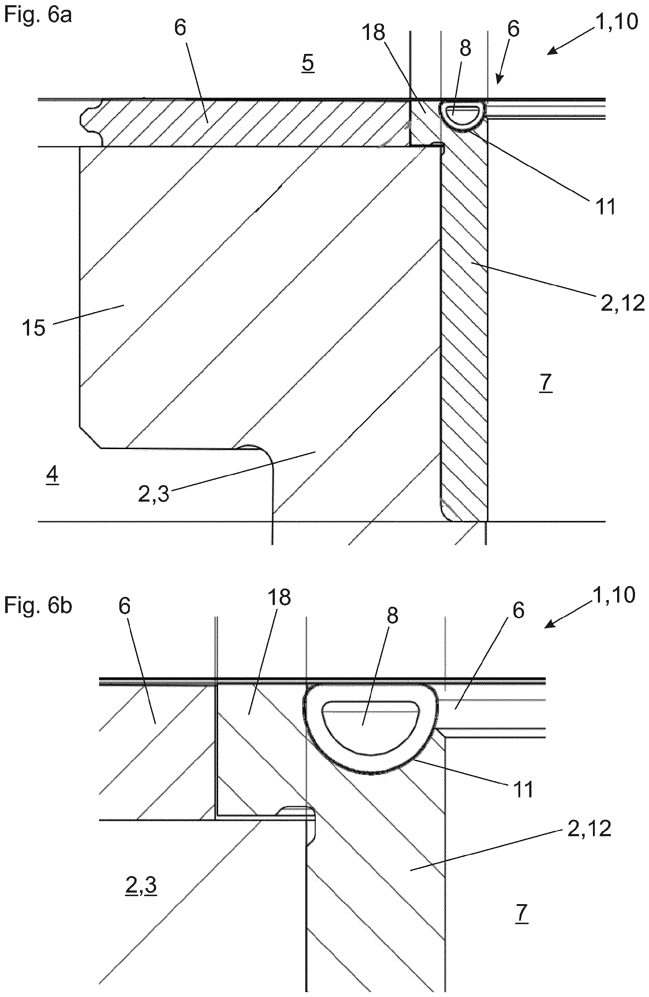

Fig. 6a and 6b schematically depict another embodiment where the chamber component 2 comprises a component which includes the scraper ring 12 and a shoulder 18 reaching over a surface of the cylinder liner 3 which faces the cylinder head 5.

In other ways this embodiment is similar to the embodiment of Fig. 1a and 1b.

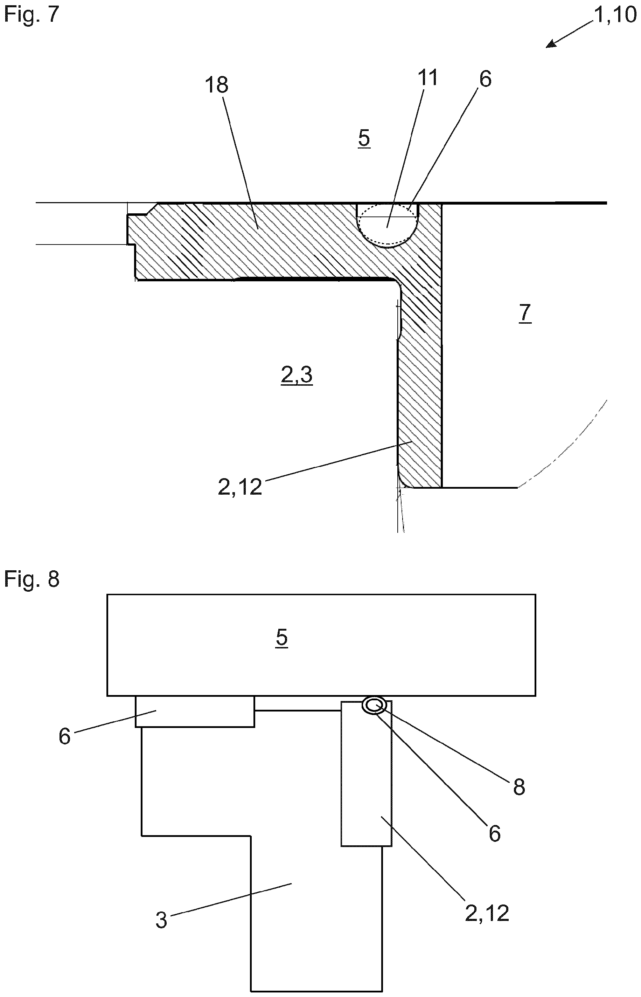

Fig. 7 schematically shows an example embodiment similar to the embodiment of Fig. 6a and 6b. In stead of the at least one head gasket 6 comprising a cavity 8 there is a head gasket 6 in the form of an elastomeric O-ring shown in a dashed line.

It should be noted that the at least one gasket 6 comprising an elastomeric O-ring instead of a cavity could for example also be used in a configuration as in Fig. 2.

The O-ring depicted in Fig. 7 can preferably be made from FKM and/or FFKM.

In this embodiment the distance of the head gasket 6 in the form of the O-ring from the combustion chamber 7 is less than half a diameter of the at least one O-ring.

In this embodiment
- the chamber component 2 comprises a deepened structure 11 in the form of a recess and/or a channel in which the O-ring is arranged and
- the combustion chamber 7 has a lateral chamber wall 9 which is substantially of cylindrical shape and
- the chamber component 2 is in the form of a component comprising a scraper ring 12.

Fig. 8 schematically shows another example embodiment similar to the embodiment of Fig. 6a and 6b. However, in the embodiment of Fig. 8 the shoulder 18 is not present.

The technical effect according to the present disclosure of a larger expansion of the head gasket 6 and therefore the prevention of dead volumes which lead to unburnt fuel mentioned in connections Fig. 1a and Fig. 1b is of course also achieved with the other embodiments presented in this document.

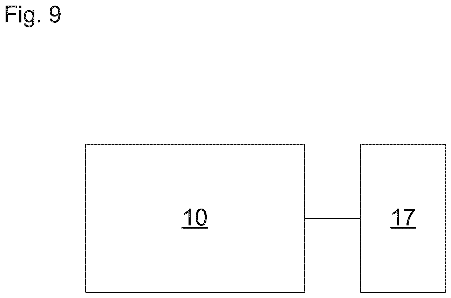

Fig. 9 purely schematically depicts a genset with an internal combustion engine 10 configured to drive a generator 17 for generating electric energy.

### List of reference numerals

- 1: Assembly
- 2: chamber component
- 3: cylinder liner
- 4: crank case
- 5: cylinder head
- 6: head gasket
- 7: combustion chamber
- 8: cavity
- 9: chamber wall
- 10: internal combustion engine
- 11: deepened structure
- 12: scraper ring
- 13: flame deck
- 14: dashed line
- 15: stop
- 16: lip
- 17: generator
- 18: shoulder

## Claims

1. Assembly for an internal combustion engine (10) comprising a chamber component (2), preferably a cylinder liner (3) or a crank case (4), a cylinder head (5), and at least one head gasket (6) for sealing a combustion chamber (7) against the environment, **characterised in that** the at least one head gasket (6) comprises a cavity (8), which cavity (8) is closed at least towards the combustion chamber (7).

2. Assembly according to claim 1, wherein the cavity (8) is completely closed.

3. Assembly according to one of the previous claims, wherein the at least one head gasket (6) has an annular structure.

4. Assembly according to one of the previous claims, wherein a cross-section of the at least one head gasket (6) in an unloaded state is substantially annular.

5. Assembly according to one of the previous claims, wherein a cross-section of the cavity (8) of the at least one head gasket (6) in an unloaded state is substantially circular.

6. Assembly according to one of the previous claims, wherein the cavity (8) is filled with a pressurised gas.

7. Assembly according to one of the previous claims, wherein the at least one head gasket (6) comprising the cavity (8) is arranged on an inner side of the chamber component (2), preferably the cylinder liner (3), facing the combustion chamber (7).

8. Assembly according to claim 7, wherein a distance of the at least one head gasket (6) comprising the cavity (8) is less than a diameter of the at least one head gasket (6) comprising the cavity (8).

9. Assembly according to claim 7 or 8, wherein the at least one head gasket (6) comprising the cavity (8) is part of a chamber wall (9) of the combustion chamber (7).

10. Assembly according to one of the previous claims, wherein the chamber component (2), in particular the cylinder liner and/or the crank case, comprises a deepened structure (11), preferably in the form of a recess and/or a channel, in which the at least one head gasket (6) comprising the cavity (8) is arranged.

11. Assembly according to one of the previous claims, wherein the combustion chamber (7) has a lateral chamber wall (9) which is substantially of cylindrical shape.

12. Assembly according to one of the previous claims, wherein the chamber component (2), preferably the cylinder liner (3), comprises an integrated scraper ring (12) on a side facing the cylinder head (5).

13. Assembly according to one of the previous claims, wherein the chamber component (2), preferably the cylinder liner (3), comprises a lip (16) which creates a curvature of the lateral chamber wall (9) of the combustion chamber towards a flame deck (13) of the cylinder head (5).

14. Assembly, in particular according to one of the preceding claims, wherein for an internal combustion engine (10) comprising a chamber component (2), preferably a cylinder liner (3) or a crank case (4), a cylinder head (5), and at least one head gasket (6) for sealing a combustion chamber (7) against the environment, **characterised in that** the at least one head gasket comprises at least one elastomeric O-ring.

15. Assembly according to claim 14, wherein the at least one O-ring is made from a fluoroelastomer, in particular FKM and/or FFKM.

16. Assembly according to claim 14 or 15, wherein
- the chamber component (2), in particular the cylinder liner and/or the crank case, comprises a deepened structure (11), preferably in the form of a recess and/or a channel, in which the at least one O-ring is arranged and/or
- the combustion chamber (7) has a lateral chamber wall (9) which is substantially of cylindrical shape and/or
- the chamber component (2), preferably the cylinder liner (3), comprises an integrated scraper ring (12) on a side facing the cylinder head (5) and/or
- the chamber component (2), preferably the cylinder liner (3), comprises a lip (16) which creates a curvature of the lateral chamber wall (9) of the combustion chamber towards a flame deck (13) of the cylinder head (5).

17. Internal combustion engine comprising an assembly (1) according to one of the previous claims.
